# EUROPEAN PATENT SPECIFICATION

(11) **EP 3 736 675 B1**
(45) Date of publication and mention of the grant of the patent: **22.05.2024**
(21) Application number: 20160864.3
(22) Date of filing: 06.03.2012
(51) Int. Cl.: G06F 3/04883, G06F 3/04842

(54) **METHOD FOR PERFORMING OPERATION ON TOUCHSCREEN AND TERMINAL**
VERFAHREN ZUR DURCHFÜHRUNG EINER OPERATION AUF EINEM BERÜHRUNGSBILDSCHIRM UND ENDGERÄT
PROCÉDÉ POUR EFFECTUER UNE OPÉRATION SUR UN ÉCRAN TACTILE ET TERMINAL

(43) Date of publication of application: 11.11.2020
(62) Divisional of application: 12736969.2
(73) Proprietor: Huawei Technologies Co., Ltd., Shenzhen, Guangdong 518129 (CN)
(72) Inventor: REN, Yi, Shenzhen, Guangdong 518129 (CN); SHI, Fengbing, Shenzhen, Guangdong 518129 (CN)
(74) Representative: Huawei European IPR

(56) References cited:
- EP-A2- 1 416 368
- WO-A2-2004/066117
- CN-A- 102 117 175
- US-A1- 2007 229 471
- US-A1- 2008 250 354
- US-A1- 2009 213 086
- US-A1- 2009 282 332
- US-A1- 2010 265 185
- US-A1- 2011 063 327
- US-A1- 2012 030 566

## Description

### TECHNICAL FIELD

The present disclosure relates to the terminal field, and in particular, to a method for performing an operation on a terminal touchscreen and a terminal.

### BACKGROUND

At present, a touchscreen is widely used in terminal products such as mobile phones and tablet computers. When a user needs to perform an operation on multiple displayed entries on a display interface of a terminal device, two methods are normally available. One method is selecting multiple displayed entries on a touchscreen one by one until all required entries are selected. The other method is, when the device provides a select-all operation, directly selecting all entries. For example, when an SMS message needs to be sent to a group of contacts in a mobile phone, the contacts need to be selected one by one until the group of contacts required by the user is selected, or all contacts are directly selected.

During the implementation of the foregoing technical solutions, the inventor finds that the prior art has at least the following problem: Much time is consumed for the user to select the displayed entries one by one, which hinders improving an operation speed and operation experience of the user; moreover, when the user does not need to select all contacts, the operation manner of directly selecting all contacts is not useful either.

WO 2004/066117 A2 refers to an improved interface for selecting and performing operations on objects. According to this document, the method allows for quick and efficient selection of all or a portion of a plurality of objects, while preserving the ability to select or deselect individual objects. An action is associated with a rule for selection of objects in a specific manner. When that action is performed, every object defined by the rule is either selected or deselected. The method allows for selection or deselection of multiple groups in the same manner, and also allows for selection of individual objects. In particular, this document relates to control interfaces for computer programs and, more particularly to a method of selecting and/or deselecting, or otherwise invoking an operation on multiple objects displayed by a computer program, in response to simple actions performed by a user or process.

US 2009/282332 A1 describes an apparatus, method and computer program product for selecting multiple items using multi-touch. In order to select an item and, by extension, an underlying object associated with the item, a user may touch the touchscreen proximate the area at which the item is displayed using multiple fingers, or other selection devices. In response to detecting that the user has touched the touchscreen using multiple fingers, or other selection devices, the electronic device may modify the graphical item to indicate that it is selected and identify the underlying object as selected. After selecting two or more graphical items and corresponding objects in this manner, the user may enter a command to be taken with respect to the selected graphical items and/or objects. In response, the electronic device may cause the action associated with the command to be performed with respect to the selected items and/or objects.

US 2012/030566 A1 presents a system with touch based selection of data items. According to this document, computing equipment may display data items in a list on a touch screen display. The computing equipment may use the touch screen display to detect touch gestures. A user may select a data item using a touch gesture such as a tap gesture. In response, the computing equipment may display a selectable option. When the option is displayed, movable markers may be placed in the list. The markers can be dragged to new locations to adjust how many of the data items are selected and highlighted in the list. Ranges of selected items may be merged by moving the markers to unify separate groups of selected items. A region that contains multiple selectable options may be displayed adjacent to a selected item. The selectable options may correspond to different ways to select and deselect items. Multifinger swipe gestures may be used to select and deselect data items.

US 2008/250354 A1 refers to a multiple item selection method for a mobile terminal. According to this document, an enhanced multiple item selection method for a mobile terminal is provided. The enhanced multiple item selection method enables selecting multiple data items by effectively selecting corresponding data items listed of a data item list. The multiple item selection method of the present invention includes displaying a data item list comprising a plurality of data items, marking, if a multiple item selection mode command is detected, a selection marker on a data item on which a cursor is located, and selecting multiple data items by navigating the cursor across two or more of the plurality of data items of the data item list. US2009/213086 A1 describes a touch screen device and an operating method thereof. The touch screen device includes a screen, a display configured to display images thereon and a detector configured to detect a touch on the screen, and a controller configured to control operation of the touch screen device in accordance with the screen touch detected by the detector. The controller causes two or more display windows to be displayed in an overlapped manner. Further, if the touch is detected on an underlying display window covered by an overlying display window, the controller causes a display form to be changed in response to the touch. That is, if a touch is detected on the display window covered by the overlying display window, the touched display window is displayed as an overlying display window.

### SUMMARY

Embodiments of the present disclosure provide a method for performing an operation on a touchscreen, a terminal, and a computer program product, which can implement free selection and a batch operation on several entries of displayed entries, thereby improving an operation speed of a user. The present invention is set out by the set of appended claims. In the following, parts of the description and drawing referring to aspects, examples or implementations, which are not covered by the claims are not presented as embodiments of the invention, but as illustrative examples useful for understanding the invention

To achieve the foregoing objective, the embodiments of the present disclosure use the following technical solutions:
A method for performing an operation on a touchscreen according to claim 1.

A terminal according to claim 5 and a computer program product according to claim 9.

According to the method for performing an operation on a touchscreen and the terminal provided by the embodiments of the present disclosure, it is detected whether a user performs a sliding operation on a preset area of a touchscreen, and when it is detected that the user performs the sliding operation on the preset area, a preset operation is performed on each displayed entry that a track of the sliding operation passes through, thereby avoiding an entry-by-entry operation performed by the user on displayed entries, implementing free selection and a batch operation on several entries of the displayed entries, and reducing operation time of the user.

### BRIEF DESCRIPTION OF DRAWINGS

To describe the technical solutions in the embodiments of the present disclosure or in the prior art more clearly, the following briefly introduces the accompanying drawings required for describing the examples or the prior art. Apparently, the accompanying drawings in the following description show merely some examples of the present disclosure.
FIG. 1 is a flowchart of a method for performing an operation on a touchscreen according to Example 1 of the present disclosure;
FIG. 2 is a schematic diagram of a display interface of a terminal in Example 1 of the present disclosure;
FIG. 3 is a schematic diagram showing a sliding operation performed on the basis of FIG. 2;
FIG. 4 is a schematic diagram of a display interface after a sliding operation illustrated in FIG. 3 is performed;
FIG. 5 is a flowchart of a method for performing an operation on a touchscreen according to Example 2 of the present disclosure;
FIG. 6 is a schematic diagram showing a sliding operation performed in Example 2 of the present disclosure;
FIG. 7 is a schematic diagram showing another sliding operation performed in Example 2 of the present disclosure;
FIG. 8 is a schematic diagram of a display interface after a sliding operation illustrated in FIG. 7 is performed;
FIG. 9 is a block diagram of a terminal according to Example 3 of the present disclosure;
FIG. 10 is a block diagram of an action unit in Example 3 of the present disclosure;
FIG. 11 is a block diagram of another action unit in Example 3 of the present disclosure;
FIG. 12 is a block diagram of still another action unit in Example 3 of the present disclosure;
FIG. 13 is a block diagram of another terminal according to Example 3 of the present disclosure;
FIG. 14 is a flowchart of an operating method applicable to a motion sensing field according to an example of the present disclosure; and
FIG. 15 is a block diagram of a terminal applicable to a motion sensing field according to an example of the present disclosure.

### DESCRIPTION OF EMBODIMENTS

The following clearly and completely describes the technical solutions in the examples of the present disclosure with reference to the accompanying drawings in the examples of the present disclosure. Apparently, the described examples are merely a part rather than all of the examples of the present disclosure.

### Example 1

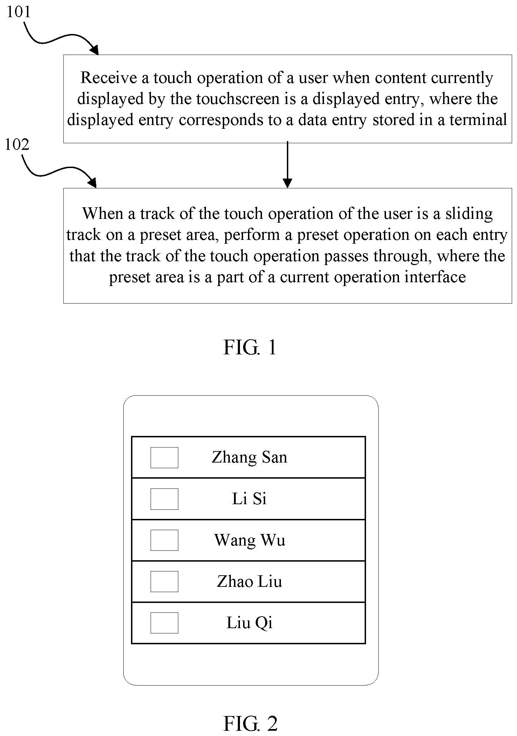

This example of the present disclosure provides a method for performing an operation on a touchscreen, which, as shown in FIG. 1, includes the following steps:
101. Receive a touch operation when content currently displayed on a touchscreen is a displayed entry, where the displayed entry is data information displayed on a current interface; the displayed entry corresponds to a data entry stored in a terminal; and the touchscreen refers to a screen on which an operation may be performed by using a finger or a stylus as a touch device.
102. When a track of the touch operation is a sliding track on a preset area, perform a preset operation on each entry that the track of the touch operation passes through,

The preset area is a part of a current operation interface.

If the touch operation is performed on the preset area, the terminal performs the preset operation on each entry of the displayed entries that the track of the touch operation passes through. Alternatively, the preset operation is a select operation or a deselect operation performed on the entry.

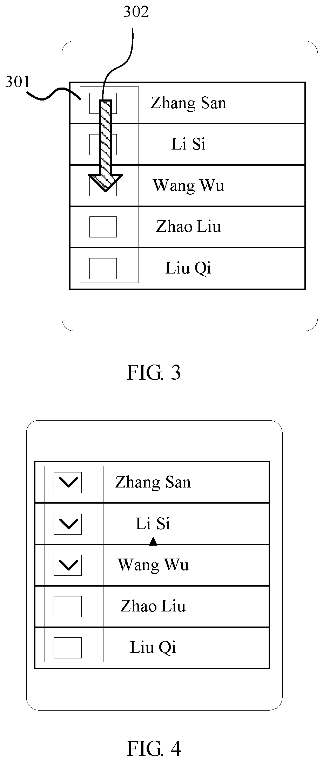

For example, as shown in FIG. 2, entries currently displayed on a touchscreen are a contact list. In this case, a user performs a touch operation. When a track of the touch operation of the user is a sliding track on a preset area, if the touch operation 302 is performed within the preset area 301 shown in FIG. 3, a preset operation is performed on each contact entry that the track of the touch operation of the user passes through. For example, in FIG. 3, the preset operation specifically is a select operation on the contact entries. Accordingly, an effect after the selection is performed is shown in FIG. 4. If the touch operation is performed outside the preset area, displayed content is displayed after flipping, which is the same as a touchscreen display solution in the prior art and is not described herein. A scope of the preset area may be preset on the terminal and is a part of the current operation interface. The preset area may have different positions and sizes for different display interfaces and displayed entries. As shown in FIG. 3, a scope of the preset area 301 may be either a scope in which contact check boxes shown in the figure are located or another preset scope.

According to the method for performing an operation on a touchscreen and the terminal provided by this example of the present disclosure, it is detected whether a user performs a sliding operation on a preset area of a touchscreen, and when it is detected that the user performs the sliding operation on the preset area, a preset operation is performed on each displayed entry that a track of the sliding operation passes through, thereby avoiding an entry-by-entry operation performed by the user on displayed entries, implementing free selection and a batch operation on several entries of the displayed entries, and reducing operating time of the user.

### Example 2

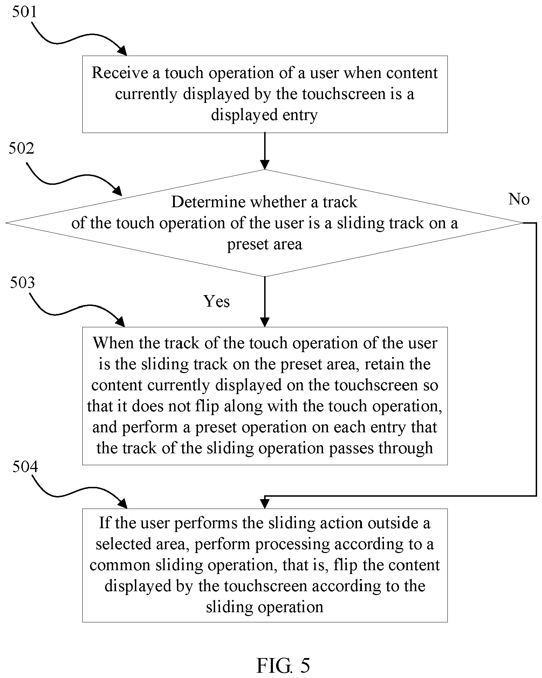

This example of the present disclosure provides a method for performing an operation on a touchscreen, which, as shown in FIG. 5, includes the following steps:
501. Receive a touch operation when content currently displayed on a touchscreen is a displayed entry, where the displayed entry is data information displayed on a current interface, and the displayed entry corresponds to a data entry stored in a terminal. In one implementation manner, as shown in FIG. 3, the displayed entry is information displayed on an address book of a terminal, where each piece of information corresponds to one data entry stored in the terminal.
502. Determine whether a track of the touch operation is a sliding track on a preset area, where the preset area is a part of a current operation interface, and the current operation interface should include at least the preset area and other areas.

If a user performs a sliding operation on the preset area, continue to perform step 503; otherwise, perform step 504.

503. When the track of the touch operation of the user is the sliding track on the preset area, perform a preset operation on each entry that the track of the sliding operation passes through. Alternatively, when the track of the touch operation of the user is the sliding track on the preset area, currently displayed content on the touchscreen may be retained and does not flip along with the touch operation.

Further, the preset operation of step 503 may be: when an entry that the track of the touch operation passes through is an unselected entry, performing a select operation on the entry; and when an entry that the track of the touch operation passes through is a selected entry, performing a deselect operation on the entry.

504. If the user performs the sliding operation on an area outside the preset area, perform processing according to a common sliding operation. That is, content displayed on the touchscreen is flipped according to the sliding operation. Flipping mentioned in this example of the present disclosure may be flipping and displaying an entire display page, or updating a part of displayed content on the display page, which is not limited in this example of the present disclosure.

When multiple entries that the track of the touch operation passes through include a selected entry and an unselected entry, it is not claimed but the preset operation of step 503 may further be: uniformly performing a select operation or a deselect operation on the multiple entries that the track of the touch operation passes through. It is not claimed but for example, when the multiple entries that the track of the touch operation passes through include a selected entry and an unselected entry, no detection is performed on a quantity and a select operation is performed on all entries that the track of the touch operation passes through, or a deselect operation is performed on all entries that the track of the touch operation passes through.

When the multiple entries that the track of the touch operation passes through include a selected entry and an unselected entry, the preset operation of step 503 may further be performing a different preset operation according to a difference between the number of selected entries and the number of unselected entries. The following steps are included:
S1: when the multiple entries that the track of the touch operation passes through include both a selected entry and an unselected entry, detect the number of selected entries and the number of unselected entries of the multiple entries that the track of the touch operation passes through;
S2: when the number of the selected entries is not less than the number of the unselected entries of the multiple entries that the track of the touch operation passes through, perform a deselect operation on the multiple entries that the track of the touch operation passes through; or
S3: when the number of the selected entries is less than the number of the deselected entries of the multiple entries that the track of the touch operation passes through, perform a select operation on the multiple entries that the track of the touch operation passes through.

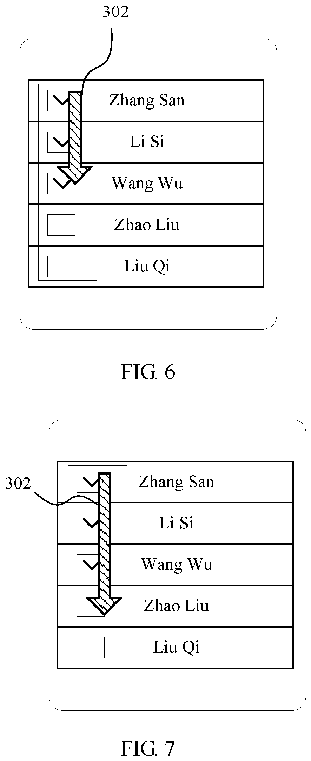

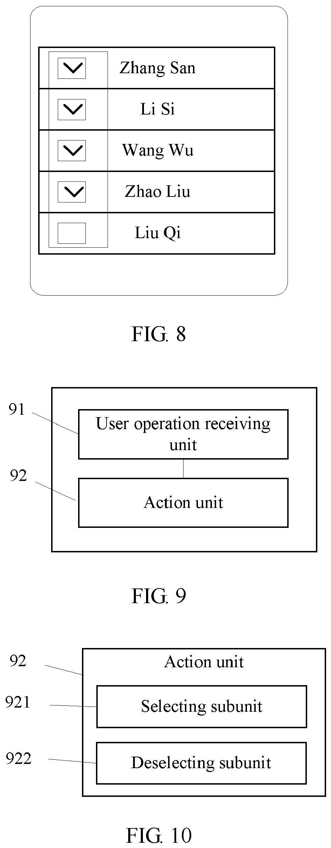

An example shown in FIG. 3 in which currently displayed entries on a touchscreen are a contact list is described. In this case, when a user performs a touch operation, where a track of the touch operation is a sliding track on a preset area 301, content currently displayed on the touchscreen is retained and does not flip, and a preset operation is performed on each entry of displayed entries that the sliding operation of the user passes through. In FIG. 3, which is a mere example not part of the claimed invention, assume that the preset operation specifically is selecting a displayed entry; accordingly, an effect after selection is performed is shown in FIG. 4, where three entries of Zhang San, Li Si, and Wang Wu are selected. If a touch operation is performed again in a case shown in FIG. 4, and a track of the touch operation is still a sliding track on the preset area 301, as shown in FIG. 6, a track 302 of the touch operation slides and passes through the three selected entries, accordingly, the three entries are deselected and a display state returns to a case shown in FIG 2, this being a mere example which is not part of the claimed invention. However, also as a mere example not forming part of the invention, if the track 302 of the touch operation slides and passes through not only the three selected entries, as shown in FIG. 7, alternatively, it is not claimed but a select operation or a deselect operation may be uniformly performed on the entries that the track passes through. A select operation or a deselect is selectively performed according to a difference between the number of selected entries and the number of deselected entries. If the select operation is performed, a display result is shown in FIG. 8.

If the sliding operation is performed outside the preset area, displayed content is displayed after flipping, which is the same as a touchscreen display solution in the prior art. A scope of the preset area may be preset on the terminal and is a part of the current operation interface. The preset area may have different positions and sizes for different display interfaces and displayed entries. As shown in FIG. 3, a scope of the preset area 301 may be either a scope in which contact check boxes shown in the figure are located or another preset scope. In addition, alternatively, in a process of performing steps of this example of the present disclosure, at least one of the following actions may further be performed:
when the track of the touch operation of the user reaches an upper/lower edge or a left/right edge of the preset area, slide upward/downward displayed content on the touchscreen, or slide, to the left/right, displayed content on the touchscreen; and save the content selected or content deselected by the track of the touch operation.

In an actual scenario, because of a difference in a terminal model or a difference in an application program, a track of a touch operation thereof may be in a left-right direction or an up-down direction. In different cases, when the track of the touch operation reaches an edge of the preset area, a flipping operation is performed and the content selected or content deselected by the track of the touch operation is saved.

The reaching, by the track of the touch operation of the user, the upper/lower edge or left/right edge of the preset area may be implemented by using a method of periodically detecting a position of the track or by sending a signal to a processor when the touch operation is sensed at the edge of the screen, which is not limited in this example of the present disclosure.

This example of the present disclosure is described by using an example in which a displayed entry is a contact list; the displayed entry is not limited thereto in an actual scenario, and may also be an audio list, an SMS message list, and an image list, and the like. In addition, the terminal in this example of the present disclosure may be an electronic device having a touchscreen, such as a mobile phone, a smart mobile terminal, and a navigator.

According to the method for performing an operation on a touchscreen and the terminal provided by the example of the present disclosure, it is detected whether a user performs a sliding operation on a preset area of a touchscreen, and when it is detected that the user performs the sliding operation on the preset area, a preset operation is performed on each displayed entry that a track of the sliding operation passes through, thereby avoiding an entry-by-entry operation performed by the user on displayed entries, implementing free selection and a batch operation on several entries of the displayed entries, and reducing operating time of the user. Moreover, according to alternative solutions provided by Example 2 of the present disclosure, it may further be implemented that when the user's sliding operation reaches an edge of the preset area, in a case where an operation that has been performed is stored, displayed content is flipped, thereby facilitating an actual application.

### Example 3

This example of the present disclosure provides a terminal. As shown in FIG. 9, the terminal includes a user operation receiving unit 91 and an action unit 92.

The user operation receiving unit 91 is configured to receive a touch operation when content currently displayed on the touchscreen is a displayed entry, where the displayed entry is data information displayed on a current interface; the displayed entry corresponds to a data entry stored in a terminal; and the touchscreen refers to a screen on which an operation may be performed by using a finger or a stylus as a touch device..

The action unit 92 is configured to perform, when a track of the touch operation is a sliding track on a preset area, a preset operation on each entry that the track of the touch operation passes through, where the preset area is a part of a current operation interface. If the touch operation is performed on the preset area, the terminal performs the preset operation on each entry of the displayed entry that the track of the touch operation passes through. Alternatively, the preset operation is a select operation or a deselect operation performed on the entry. A scope of the preset area may be preset on the terminal and is a part of the current operation interface. The preset area may have different positions and sizes for different display interfaces and displayed entries. As shown in FIG. 3, a scope of the preset area 301 may be either a scope in which contact check boxes shown in the figure are located or another preset scope.

Further, as shown in FIG. 10, according to a difference in content of the preset operation, the action unit 92 may include a selecting subunit 921 and a deselecting subunit 922. The selecting subunit 921 is specifically configured to perform, when an entry that the track of the touch operation passes through is an unselected entry, a select operation on the entry; and the deselecting subunit 922 is configured to perform, when an entry that the track of the touch operation passes through is a selected entry, a deselect operation on the entry.

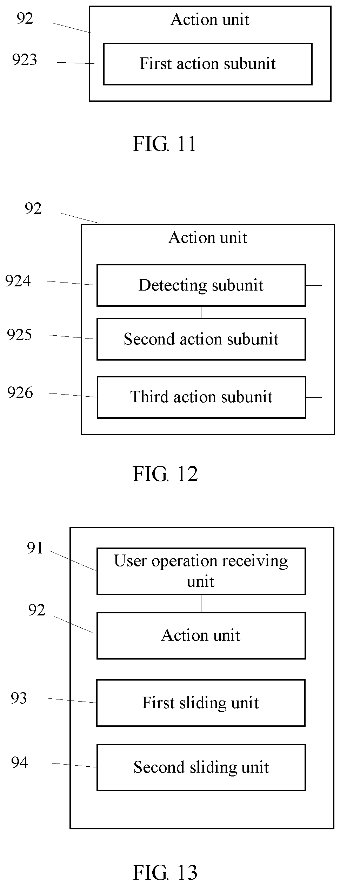

Moreover, alternatively but not claimed, as shown in FIG. 11, the action unit 92 may include a first action subunit 923, configured to uniformly perform, when multiple entries that the track of the touch operation passes through include both a selected entry and an unselected entry, a select operation or a deselect operation on the multiple entries that the track of the touch operation passes through.

As shown in FIG. 12, the action unit 92 may include a detecting subunit 924, a second action subunit 925 and/or a third action subunit 926.

The detecting subunit 924 is configured to detect, when multiple entries that the track of the touch operation passes through include both a selected entry and an unselected entry, the number of selected entries and the number of deselected entries of the multiple entries that the track of the touch operation passes through.

The second action subunit 925 is configured to perform, when the number of the selected entries is not less than the number of the deselected entries of the multiple entries that the track of the touch operation passes through, a deselect operation on the multiple entries that the track of the touch operation passes through.

The third action subunit 926 is configured to perform, when the number of the selected entries is less than the number of the deselected entries of the multiple entries that the track of the touch operation passes through, a select operation on the multiple entries that the track of the touch operation passes through.

Further, as shown in FIG. 13, the terminal may further include at least one of a first sliding unit 93 and a second sliding unit 94. The first sliding unit 93 is configured to, when the track of the touch operation is the sliding track on the preset area and the track of the touch operation reaches an upper/lower edge of the preset area, flip upward/downward the content currently displayed on the touchscreen. The second sliding unit 94 is configured to, when the track of the touch operation is the sliding track on the preset area and the track of the touch operation reaches a left/right edge of the preset area, flip, to the left/right, the content currently displayed on the touchscreen.

For the description of an operation of a touchscreen provided by the terminal according to this example of the present disclosure, reference may be made to the related description of FIG. 2, FIG. 3, FIG. 4, FIG. 6, FIG. 7, and FIG. 8 in Example 2, which is not described repeatedly herein.

According to the terminal in this example of the present disclosure, it is detected whether a user performs a sliding operation on a preset area of a touchscreen, and when it is detected that the user performs the sliding operation on the preset area, a preset operation is performed on each displayed entry that a track of the sliding operation passes through, thereby avoiding an entry-by-entry operation performed by the user on displayed entries, implementing free selection and a batch operation on several entries of the displayed entries, and reducing operation time of the user. Moreover, by using alternative units of the terminal, it is further implemented that when the sliding operation reaches an edge of the preset area, in a case where an operation that has been performed is saved, displayed content may be flipped, thereby facilitating an actual application. It should be noted that the terminal according to this example of the present disclosure may be an electronic device having a touchscreen, such as a mobile phone, a smart mobile terminal, and a navigator.

In addition, it should be noted that, as described in the examples of the present disclosure, the technical solutions described in the present disclosure are applicable not only to a touchscreen, and may also be applicable to another field, such as a motion sensing field.

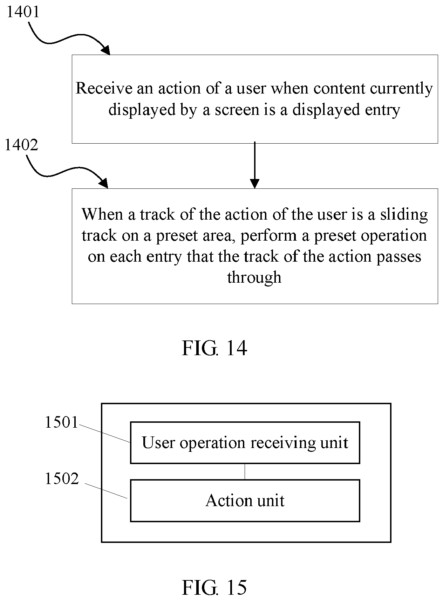

When the technical solutions described in the examples of the present disclosure are applicable to the motion sensing field, as shown in FIG. 14, the method includes the following:
1401. Receive an action of a user when content currently displayed on a screen is a displayed entry, where the displayed entry corresponds to a data entry stored in a terminal.
1402. When a track of the action of the user is a sliding track on a preset area, perform a preset operation on each entry that the track of the touch operation passes through, where the preset area is a part of a current operation interface. The action of the user may be collected by using a sensor. The preset operation may be a select/deselect operation on the displayed entry. When the technical solutions described in the examples of the present disclosure are applicable to the motion sensing field, as shown in FIG. 15, the apparatus includes the following:
   a user operation receiving unit 1501, configured to receive an action of a user when content currently displayed on a screen is a displayed entry, where the displayed entry corresponds to a data entry stored in a terminal; and
   an action unit 1502, configured to perform, when a track of the action of the user is a sliding track on a preset area, a preset operation on each entry that the track of the touch operation passes through, where the preset area is a part of a current operation interface. The action of the user may be collected by using a sensor. The preset operation may be a select/deselect operation on the displayed entry.

A person of ordinary skill in the art may understand that all or a part of the steps of the method examples may be implemented by hardware or a program instructing relevant hardware. The program may be stored in a computer readable storage medium. When the program runs, the steps of the method examples are performed. The foregoing storage medium includes: any medium that can store program code, such as a ROM, a RAM, a magnetic disk, or an optical disc.

## Claims

1. A method for performing an operation on a touchscreen, comprising:
receiving (101), by a terminal, a first touch operation when content currently displayed on the touchscreen includes a first displayed entry corresponding to a first data entry stored in the terminal, a second displayed entry corresponding to a second data entry stored in the terminal, a third displayed entry corresponding to a third data entry stored in the terminal, and a fourth displayed entry corresponding to a fourth data entry stored in the terminal, wherein the first displayed entry, the second displayed entry and the third displayed entry are displayed as being selected, the fourth displayed entry is displayed as being unselected;
when multiple displayed entries that a first track (302) of the first touch operation being a sliding track on a preset area (301) passes through include both selected and unselected displayed entries, detecting, by the terminal,
- a number of selected displayed entries of the multiple displayed entries that the first track (302) of the first touch operation passes through, and
- a number of unselected displayed entries of the multiple displayed entries that the first track (302) of the first touch operation passes through; and
selectively performing (102), by the terminal, a select or deselect operation on each entry of the multiple displayed entries that the first track (302) of the first touch operation passes through according to a difference between the number of the selected display entries and the number of the unselected displayed entries,
wherein the preset area is a part of a current operation interface,
wherein the touchscreen refers to a screen on which an operation is performed by using a finger or a stylus as a touch device,
wherein the sliding track of the first touch operation starts from the first displayed entry and passes through the second displayed entry, the third displayed entry and the fourth displayed entry, and
wherein
when the number of the selected displayed entries is not less than the number of the unselected displayed entries of the multiple entries that the first track (302) of the touch operation passes through, performing, by the terminal, the deselect operation on the multiple displayed entries that the first track (302) of the touch operation passes through; or
when the number of the selected displayed entries is less than the number of the unselected displayed entries of the multiple entries that the first track (302) of the touch operation passes through, performing, by the terminal, the select operation on the multiple entries that the first track (302) of the touch operation passes through.

2. The method according to claim 1, the method further comprising: when the first track (302) of the first touch operation reaches an edge of the preset area, flipping by the terminal, content currently displayed on the touchscreen to display new displayed entries on the touchscreen, and saving a status of being selected for any displayed entries through which the first track (302) passes when the first track (302) reaches the edge of the preset area, wherein the flipping content comprises updating a part of the content displayed on the touchscreen.

3. The method according to claim 2, wherein flipping the content currently displayed on the touchscreen comprises flipping the content currently displayed on the touchscreen upward, downward, leftward or rightward.

4. The method according to any one of claims 1 to 3, wherein the first data entry, the second data entry, the third data entry, and the fourth data entry are images.

5. A terminal, comprising:
a touchscreen, wherein the touchscreen refers to a screen configured to be operated by using a finger or a stylus as a touch device; and
a memory, configured to store program code, that when executed, causes the terminal to:
receive (101) a first touch operation when content currently displayed on the touchscreen includes a first displayed entry corresponding to a first data entry stored in a terminal, a second displayed entry corresponding to a second data entry stored in the terminal, a third displayed entry corresponding to a third data entry stored in the terminal, and a fourth displayed entry corresponding to a fourth data entry stored in the terminal, wherein the first displayed entry, the second displayed entry and the third displayed entry are displayed as being selected, the fourth displayed entry is displayed as being unselected;
when multiple displayed entries that a first track (302) of the first touch operation being a sliding track on a preset area (301) passes through include both selected and unselected displayed entries, detect
- a number of selected displayed entries of the multiple displayed entries that the first track (302) of the first touch operation passes through, and
- a number of unselected displayed entries of the multiple displayed entries that the first track (302) of the first touch operation passes through; and
selectively perform (102) a deselect or select operation on each entry of the multiple displayed entries that the first track (302) of the first touch operation passes through according to a difference between the number of the selected display entries and the number of the unselected displayed entries,
wherein the sliding track of the first touch operation starts from the first displayed entry and passes through the second displayed entry, the third displayed entry and the fourth displayed entry, and
wherein the program code, that when executed, further causes the terminal to:
when the number of the selected displayed entries is not less than the number of the unselected displayed entries of the multiple entries that the first track (302) of the touch operation passes through, perform the deselect operation on the multiple displayed entries that the track (302) of the touch operation passes through; or
when the number of the selected displayed entries is less than the number of the unselected displayed entries of the multiple entries that the first track (302) of the touch operation passes through, perform the select operation on the multiple entries that the first track (302) of the touch operation passes through.

6. The terminal according to claim 5, wherein the program code, that when executed, further causes the terminal to:
when the first track (302) of the first touch operation reaches an edge of the preset area, flip content currently displayed on the touchscreen to display new displayed entries on the touchscreen, and save a status of being selected for any displayed entries through which the first track (302) passes when the first track (302) reaches the edge of the preset area, wherein the flip content comprises update a part of the content displayed on the touchscreen.

7. The terminal according to claim 6, wherein flipping the content currently displayed on the touchscreen comprises flipping the content currently displayed on the touchscreen upward, downward, leftward or rightward.

8. The terminal according to any one of claims 5 to 7, wherein the first data entry, the second data entry, the third data entry, and the fourth data entry are images.

9. A computer program product comprising program code, that when executed, causes the terminal to:
receive (101) a first touch operation (302) when content currently displayed on a touchscreen includes a first displayed entry corresponding to a first data entry stored in a terminal, a second displayed entry corresponding to a second data entry stored in the terminal, a third displayed entry corresponding to a third data entry stored in the terminal, and a fourth displayed entry corresponding to a fourth data entry stored in the terminal, wherein the first displayed entry, the second displayed entry and the third displayed entry are displayed as being selected, the fourth displayed entry is displayed as being unselected, wherein the touchscreen refers to a screen configured to be operated by using a finger or a stylus as a touch device;
when multiple displayed entries that a first track (302) of the first touch operation being a sliding track on a preset area (301) passes through include both selected and unselected displayed entries, detect
- a number of selected displayed entries of the multiple displayed entries that the first track (302) of the first touch operation passes through, and
- a number of unselected displayed entries of the multiple displayed entries that the first track (302) of the first touch operation passes through; and
selectively perform (102), when a first track (302) of the first touch operation is a sliding track on a preset area (301), a deselect or select operation on each entry of the multiple displayed entries that the first track (302) of the first touch operation passes through according to a difference between the number of the selected display entries and the number of the unselected displayed entries, wherein the preset area is a part of a current operation interface, wherein the sliding track of the first touch operation starts from the first displayed entry and passes through the second displayed entry, the third displayed entry and the fourth displayed entry,
wherein
the program code when executed, causes the terminal to:
when the number of the selected displayed entries is not less than the number of the unselected displayed entries of the multiple entries that the first track (302) of the touch operation passes through, perform the deselect operation on the multiple displayed entries that the track (302) of the touch operation passes through; or
when the number of the selected displayed entries is less than the number of the unselected displayed entries of the multiple entries that the first track (302) of the touch operation passes through, perform the select operation on the multiple entries that the first track (302) of the touch operation passes through.

10. The computer program product according to claim 9, wherein the program code, that when executed, further causes the terminal to:
when the first track (302) of the first touch operation reaches an edge of the preset area, flip content currently displayed on the touchscreen to display new displayed entries on the touchscreen, and save a status of being selected for any displayed entries through which the first track (302) passes when the first track (302) reaches the edge of the preset area, wherein the flip content comprises update a part of the content displayed on the touchscreen.

## Patentansprüche

1. Verfahren zum Durchführen einer Operation auf einem Berührungsbildschirm, das Folgendes umfasst:
Empfangen (101), durch ein Endgerät, einer ersten Berührungsoperation, wenn ein aktuell auf dem Berührungsbildschirm angezeigter Inhalt einen ersten angezeigten Eintrag, der einem in dem Endgerät gespeicherten ersten Dateneintrag entspricht, einen zweiten angezeigten Eintrag, der einem in dem Endgerät gespeicherten zweiten Dateneintrag entspricht, einen dritten angezeigten Eintrag, der einem in dem Endgerät gespeicherten dritten Dateneintrag entspricht, und einen vierten angezeigten Eintrag,
der einem in dem Endgerät gespeicherten vierten Dateneintrag entspricht, beinhaltet,
wobei der erste angezeigte Eintrag, der zweite angezeigte Eintrag und der dritte angezeigte Eintrag als ausgewählt angezeigt werden, der vierte angezeigte Eintrag als nicht ausgewählt angezeigt wird;
wenn mehrere angezeigte Einträge, durch die eine erste Spur (302) der ersten Berührungsoperation, bei der es sich um eine Gleitspur in einem vorgegebenen Bereich (301) handelt, verläuft, sowohl ausgewählte als auch nicht ausgewählte angezeigte Einträge beinhalten, Detektieren, durch das Endgerät,
- einer Anzahl ausgewählter angezeigter Einträge der mehreren angezeigten Einträge, durch die die erste Spur (302) der ersten Berührungsoperation verläuft, und
- einer Anzahl nicht ausgewählter angezeigter Einträge der mehreren angezeigten Einträge, durch die die erste Spur (302) der ersten Berührungsoperation verläuft, und selektives Durchführen (102), durch das Endgerät, einer Auswahl- oder Auswahlaufhebungsoperation an jedem Eintrag der mehreren angezeigten Einträge, durch die die erste Spur (302) der ersten Berührungsoperation verläuft, gemäß einer Differenz zwischen der Anzahl der ausgewählten angezeigten Einträge und der Anzahl der nicht ausgewählten angezeigten Einträge,
wobei der vorgegebene Bereich ein Teil einer aktuellen Operationsoberfläche ist,
wobei sich der Berührungsbildschirm auf einen Bildschirm bezieht, auf dem eine Operation unter Verwendung eines Fingers oder eines Eingabestifts als eine Berührungsvorrichtung durchgeführt wird,
wobei die Gleitspur der ersten Berührungsoperation bei dem ersten angezeigten Eintrag beginnt und durch den zweiten angezeigten Eintrag, den dritten angezeigten Eintrag und den vierten angezeigten Eintrag verläuft, und
wobei,
wenn die Anzahl der ausgewählten angezeigten Einträge nicht kleiner ist als die Anzahl der nicht ausgewählten angezeigten Einträge der mehreren Einträge, durch die die erste Spur (302) der Berührungsoperation verläuft, Durchführen, durch das Endgerät, der Auswahlaufhebungsoperation an den mehreren angezeigten Einträgen,
durch die die erste Spur (302) der Berührungsoperation verläuft, oder,
wenn die Anzahl der ausgewählten angezeigten Einträge kleiner ist als die Anzahl der nicht ausgewählten angezeigten Einträge der mehreren Einträge, durch die die erste Spur (302) der Berührungsoperation verläuft, Durchführen, durch das Endgerät, der Auswahloperation an den mehreren Einträgen, durch die die erste Spur (302) der Berührungsoperation verläuft.

2. Verfahren nach Anspruch 1, wobei das Verfahren ferner Folgendes umfasst: wenn die erste Spur (302) der ersten Berührungsoperation einen Rand des vorgegebenen Bereichs erreicht, Wenden, durch das Endgerät, eines aktuell auf dem Berührungsbildschirm angezeigten Inhalts, um neue angezeigte Einträge auf dem Berührungsbildschirm anzuzeigen, und Speichern eines Ausgewählt-Status für jegliche angezeigten Einträge, durch die die erste Spur (302) verläuft, wenn die erste Spur (302) den Rand des vorgegebenen Bereichs erreicht, wobei das Wenden des Inhalts Aktualisieren eines Teils des auf dem Berührungsbildschirm angezeigten Inhalts umfasst.

3. Verfahren nach Anspruch 2, wobei das Wenden des aktuell auf dem Berührungsbildschirm angezeigten Inhalts Wenden des aktuell auf dem Berührungsbildschirm angezeigten Inhalts nach oben, nach unten, nach links oder nach rechts umfasst.

4. Verfahren nach einem der Ansprüche 1 bis 3, wobei der erste Dateneintrag, der zweite Dateneintrag, der dritte Dateneintrag und der vierte Dateneintrag Bilder sind.

5. Endgerät, das Folgendes umfasst:
einen Berührungsbildschirm, wobei sich der Berührungsbildschirm auf einen Bildschirm bezieht, der dazu ausgelegt ist, unter Verwendung eines Fingers oder eines Eingabestifts als eine Berührungsvorrichtung bedient zu werden; und
einen Speicher, ausgelegt zum Speichern eines Programmcodes, der bei Ausführung bewirkt, dass das Endgerät Folgendes durchführt:
Empfangen (101) einer ersten Berührungsoperation, wenn ein aktuell auf dem Berührungsbildschirm angezeigter Inhalt einen ersten angezeigten Eintrag, der einem in dem Endgerät gespeicherten ersten Dateneintrag entspricht, einen zweiten angezeigten Eintrag, der einem in dem Endgerät gespeicherten zweiten Dateneintrag entspricht, einen dritten angezeigten Eintrag, der einem in dem Endgerät gespeicherten dritten Dateneintrag entspricht, und einen vierten angezeigten Eintrag, der einem in dem Endgerät gespeicherten vierten Dateneintrag entspricht, beinhaltet, wobei der erste angezeigte Eintrag, der zweite angezeigte Eintrag und der dritte angezeigte Eintrag als ausgewählt angezeigt werden, der vierte angezeigte Eintrag als nicht ausgewählt angezeigt wird;
wenn mehrere angezeigte Einträge, durch die eine erste Spur (302) der ersten Berührungsoperation, bei der es sich um eine Gleitspur in einem vorgegebenen Bereich (301) handelt, verläuft, sowohl ausgewählte als auch nicht ausgewählte angezeigte Einträge beinhalten, Detektieren
- einer Anzahl ausgewählter angezeigter Einträge der mehreren angezeigten Einträge, durch die die erste Spur (302) der ersten Berührungsoperation verläuft, und
- einer Anzahl nicht ausgewählter angezeigter Einträge der mehreren angezeigten Einträge, durch die die erste Spur (302) der ersten Berührungsoperation verläuft, und selektives Durchführen (102) einer Auswahlaufhebungs- oder Auswahloperation an jedem Eintrag der mehreren angezeigten Einträge, durch die die erste Spur (302) der ersten Berührungsoperation verläuft, gemäß einer Differenz zwischen der Anzahl der ausgewählten angezeigten Einträge und der Anzahl der nicht ausgewählten angezeigten Einträge,
wobei die Gleitspur der ersten Berührungsoperation bei dem ersten angezeigten Eintrag beginnt und durch den zweiten angezeigten Eintrag, den dritten angezeigten Eintrag und den vierten angezeigten Eintrag verläuft, und
wobei der Programmcode bei Ausführung ferner bewirkt, dass das Endgerät Folgendes durchführt:
wenn die Anzahl der ausgewählten angezeigten Einträge nicht kleiner ist als die Anzahl der nicht ausgewählten angezeigten Einträge der mehreren Einträge, durch die die erste Spur (302) der Berührungsoperation verläuft, Durchführen der Auswahlaufhebungsoperation an den mehreren angezeigten Einträgen, durch die die Spur (302) der Berührungsoperation verläuft, oder,
wenn die Anzahl der ausgewählten angezeigten Einträge kleiner ist als die Anzahl der nicht ausgewählten angezeigten Einträge der mehreren Einträge, durch die die erste Spur (302) der Berührungsoperation verläuft, Durchführen der Auswahloperation an den mehreren Einträgen, durch die die erste Spur (302) der Berührungsoperation verläuft.

6. Endgerät nach Anspruch 5, wobei der Programmcode bei Ausführung ferner bewirkt, dass das Endgerät Folgendes durchführt:
wenn die erste Spur (302) der ersten Berührungsoperation einen Rand des vorgegebenen Bereichs erreicht, Wenden eines aktuell auf dem Berührungsbildschirm angezeigten Inhalts, um neue angezeigte Einträge auf dem Berührungsbildschirm anzuzeigen, und Speichern eines Ausgewählt-Status für jegliche angezeigten Einträge,
durch die die erste Spur (302) verläuft, wenn die erste Spur (302) den Rand des vorgegebenen Bereichs erreicht, wobei das Wenden des Inhalts Aktualisieren eines Teils des auf dem Berührungsbildschirm angezeigten Inhalts umfasst.

7. Endgerät nach Anspruch 6, wobei das Wenden des aktuell auf dem Berührungsbildschirm angezeigten Inhalts Wenden des aktuell auf dem Berührungsbildschirm angezeigten Inhalts nach oben, nach unten, nach links oder nach rechts umfasst.

8. Endgerät nach einem der Ansprüche 5 bis 7, wobei der erste Dateneintrag, der zweite Dateneintrag, der dritte Dateneintrag und der vierte Dateneintrag Bilder sind.

9. Computerprogrammprodukt, das einen Programmcode umfasst, der bei Ausführung bewirkt, dass das Endgerät Folgendes durchführt:
Empfangen (101) einer ersten Berührungsoperation (302), wenn ein aktuell auf einem Berührungsbildschirm angezeigter Inhalt einen ersten angezeigten Eintrag, der einem in einem Endgerät gespeicherten ersten Dateneintrag entspricht, einen zweiten angezeigten Eintrag, der einem in dem Endgerät gespeicherten zweiten Dateneintrag entspricht, einen dritten angezeigten Eintrag, der einem in dem Endgerät gespeicherten dritten Dateneintrag entspricht, und einen vierten angezeigten Eintrag, der einem in dem Endgerät gespeicherten vierten Dateneintrag entspricht, beinhaltet, wobei der erste angezeigte Eintrag, der zweite angezeigte Eintrag und der dritte angezeigte Eintrag als ausgewählt angezeigt werden, der vierte angezeigte Eintrag als nicht ausgewählt angezeigt wird, wobei sich der Berührungsbildschirm auf einen Bildschirm bezieht, der dazu ausgelegt ist, unter Verwendung eines Fingers oder eines Eingabestifts als eine Berührungsvorrichtung bedient zu werden;
wenn mehrere angezeigte Einträge, durch die eine erste Spur (302) der ersten Berührungsoperation, bei der es sich um eine Gleitspur in einem vorgegebenen Bereich (301) handelt, verläuft, sowohl ausgewählte als auch nicht ausgewählte angezeigte Einträge beinhalten, Detektieren
- einer Anzahl ausgewählter angezeigter Einträge der mehreren angezeigten Einträge, durch die die erste Spur (302) der ersten Berührungsoperation verläuft, und
- einer Anzahl nicht ausgewählter angezeigter Einträge der mehreren angezeigten Einträge, durch die die erste Spur (302) der ersten Berührungsoperation verläuft, und selektives Durchführen (102), wenn eine erste Spur (302) der ersten Berührungsoperation eine Gleitspur in einem vorgegebenen Bereich (301) ist, einer Auswahlaufhebungs- oder Auswahloperation an jedem Eintrag der mehreren angezeigten Einträge, durch die die erste Spur (302) der ersten Berührungsoperation verläuft, gemäß einer Differenz zwischen der Anzahl der ausgewählten angezeigten Einträge und der Anzahl der nicht ausgewählten angezeigten Einträge, wobei der vorgegebene Bereich ein Teil einer aktuellen Operationsoberfläche ist, wobei die Gleitspur der ersten Berührungsoperation bei dem ersten angezeigten Eintrag beginnt und durch den zweiten angezeigten Eintrag, den dritten angezeigten Eintrag und den vierten angezeigten Eintrag verläuft,
wobei
der Programmcode bei Ausführung bewirkt, dass das Endgerät Folgendes durchführt:
wenn die Anzahl der ausgewählten angezeigten Einträge nicht kleiner ist als die Anzahl der nicht ausgewählten angezeigten Einträge der mehreren Einträge, durch die die erste Spur (302) der Berührungsoperation verläuft, Durchführen der Auswahlaufhebungsoperation an den mehreren angezeigten Einträgen, durch die die Spur (302) der Berührungsoperation verläuft, oder,
wenn die Anzahl der ausgewählten angezeigten Einträge kleiner ist als die Anzahl der nicht ausgewählten angezeigten Einträge der mehreren Einträge, durch die die erste Spur (302) der Berührungsoperation verläuft, Durchführen der Auswahloperation an den mehreren Einträgen, durch die die erste Spur (302) der Berührungsoperation verläuft.

10. Computerprogrammprodukt nach Anspruch 9, wobei der Programmcode bei Ausführung ferner bewirkt, dass das Endgerät Folgendes durchführt:
wenn die erste Spur (302) der ersten Berührungsoperation einen Rand des vorgegebenen Bereichs erreicht, Wenden eines aktuell auf dem Berührungsbildschirm angezeigten Inhalts, um neue angezeigte Einträge auf dem Berührungsbildschirm anzuzeigen, und Speichern eines Ausgewählt-Status für jegliche angezeigten Einträge,
durch die die erste Spur (302) verläuft, wenn die erste Spur (302) den Rand des vorgegebenen Bereichs erreicht, wobei das Wenden des Inhalts Aktualisieren eines Teils des auf dem Berührungsbildschirm angezeigten Inhalts umfasst.

## Revendications

1. Procédé de réalisation d'une opération sur un écran tactile, comprenant :
la réception (101), par un terminal, d'une première opération tactile lorsqu'un contenu actuellement affiché sur l'écran tactile comporte une première entrée affichée correspondant à une première entrée de données stockée dans le terminal, une deuxième entrée affichée correspondant à une deuxième entrée de données stockée dans le terminal, une troisième entrée affichée correspondant à une troisième entrée de données stockée dans le terminal, et une quatrième entrée affichée correspondant à une quatrième entrée de données stockée dans le terminal, la première entrée affichée, la deuxième entrée affichée et la troisième entrée affichée étant affichées comme étant sélectionnées, la quatrième entrée affichée étant affichée comme étant non sélectionnée ;
lorsque de multiples entrées affichées, par lesquelles passe une première course (302) de la première opération tactile prenant la forme d'une course glissante sur une zone prédéfinie (301), comportent des entrées affichées à la fois sélectionnées et non sélectionnées, la détection, par le terminal, de
- un nombre d'entrées affichées sélectionnées des multiples entrées affichées par lesquelles passe la première course (302) de la première opération tactile, et
- un nombre d'entrées affichées non sélectionnées des multiples entrées affichées par lesquelles passe la première course (302) de la première opération tactile ; et
la réalisation sélective (102), par le terminal, d'une opération de sélection ou de désélection sur chaque entrée des multiples entrées affichées par lesquelles passe la première course (302) de la première opération tactile selon une différence entre le nombre des entrées affichées sélectionnées et le nombre des entrées affichées non sélectionnées,
la zone prédéfinie faisant partie d'une interface d'opération actuelle,
l'écran tactile désignant un écran sur lequel une opération est réalisée en utilisant un doigt ou un stylet comme dispositif tactile,
la course glissante de la première opération tactile partant de la première entrée affichée et passant par la deuxième entrée affichée, la troisième entrée affichée et la quatrième entrée affichée, et
lorsque le nombre des entrées affichées sélectionnées n'est pas inférieur au nombre des entrées affichées non sélectionnées des multiples entrées par lesquelles passe la première course (302) de l'opération tactile, la réalisation, par le terminal, de l'opération de désélection sur les multiples entrées affichées par lesquelles passe la première course (302) de l'opération tactile ; ou
lorsque le nombre des entrées affichées sélectionnées est inférieur au nombre des entrées affichées non sélectionnées des multiples entrées par lesquelles passe la première course (302) de l'opération tactile, la réalisation, par le terminal, de l'opération de sélection sur les multiples entrées par lesquelles passe la première course (302) de l'opération tactile.

2. Procédé selon la revendication 1, le procédé comprenant en outre : lorsque la première course (302) de la première opération tactile atteint un bord de la zone prédéfinie, le défilement, par le terminal, d'un contenu actuellement affiché sur l'écran tactile pour afficher de nouvelles entrées affichées sur l'écran tactile, et la sauvegarde d'un état de sélection pour toute entrée affichée par laquelle passe la première course (302) lorsque la première course (302) atteint le bord de la zone prédéfinie, le défilement d'un contenu comprenant l'actualisation d'une partie du contenu affiché sur l'écran tactile.

3. Procédé selon la revendication 2, le défilement du contenu actuellement affiché sur l'écran tactile comprenant le défilement du contenu actuellement affiché sur l'écran tactile vers le haut, vers le bas, vers la gauche ou vers la droite.

4. Procédé selon l'une quelconque des revendications 1 à 3, la première entrée de données, la deuxième entrée de données, la troisième entrée de données et la quatrième entrée de données étant des images.

5. Terminal, comprenant :
un écran tactile, l'écran tactile désignant un écran configuré pour fonctionner en utilisant un doigt ou un stylet comme dispositif tactile ; et
une mémoire, configurée pour stocker un code de programme qui, lorsqu'il est exécuté, amène le terminal à :
recevoir (101) une première opération tactile lorsqu'un contenu actuellement affiché sur l'écran tactile comporte une première entrée affichée correspondant à une première entrée de données stockée dans un terminal, une deuxième entrée affichée correspondant à une deuxième entrée de données stockée dans le terminal, une troisième entrée affichée correspondant à une troisième entrée de données stockée dans le terminal, et une quatrième entrée affichée correspondant à une quatrième entrée de données stockée dans le terminal, la première entrée affichée, la deuxième entrée affichée et la troisième entrée affichée étant affichées comme étant sélectionnées, la quatrième entrée affichée étant affichée comme étant non sélectionnée ;
lorsque de multiples entrées affichées, par lesquelles passe une première course (302) de la première opération tactile prenant la forme d'une course glissante sur une zone prédéfinie (301), comportent des entrées affichées à la fois sélectionnées et non sélectionnées, détecter
- un nombre d'entrées affichées sélectionnées des multiples entrées affichées par lesquelles passe la première course (302) de la première opération tactile, et
- un nombre d'entrées affichées non sélectionnées des multiples entrées affichées par lesquelles passe la première course (302) de la première opération tactile ; et
réaliser sélectivement (102) une opération de sélection ou de désélection sur chaque entrée des multiples entrées affichées par lesquelles passe la première course (302) de la première opération tactile selon une différence entre le nombre des entrées affichées sélectionnées et le nombre des entrées affichées non sélectionnées,
la course glissante de la première opération tactile partant de la première entrée affichée et passant par la deuxième entrée affichée, la troisième entrée affichée et la quatrième entrée affichée, et
le code de programme, lorsqu'il est exécuté, amenant en outre le terminal à :
lorsque le nombre des entrées affichées sélectionnées n'est pas inférieur au nombre des entrées affichées non sélectionnées des multiples entrées par lesquelles passe la première course (302) de l'opération tactile, réaliser l'opération de désélection sur les multiples entrées affichées par lesquelles passe la course (302) de l'opération tactile ; ou
lorsque le nombre des entrées affichées sélectionnées est inférieur au nombre des entrées affichées non sélectionnées des multiples entrées par lesquelles passe la première course (302) de l'opération tactile, réaliser l'opération de sélection sur les multiples entrées par lesquelles passe la première course (302) de l'opération tactile.

6. Terminal selon la revendication 5, le code de programme, lorsqu'il est exécuté, amenant en outre le terminal à :
lorsque la première course (302) de la première opération tactile atteint un bord de la zone prédéfinie, faire défiler un contenu actuellement affiché sur l'écran tactile pour afficher de nouvelles entrées affichées sur l'écran tactile, et sauvegarder un état de sélection pour toute entrée affichée par laquelle passe la première course (302) lorsque la première course (302) atteint le bord de la zone prédéfinie, faire défiler un contenu comprenant actualiser une partie du contenu affiché sur l'écran tactile.

7. Terminal selon la revendication 6, le défilement du contenu actuellement affiché sur l'écran tactile comprenant le défilement du contenu actuellement affiché sur l'écran tactile vers le haut, vers le bas, vers la gauche ou vers la droite.

8. Terminal selon l'une quelconque des revendications 5 à 7, la première entrée de données, la deuxième entrée de données, la troisième entrée de données et la quatrième entrée de données étant des images.

9. Produit-programme d'ordinateur comprenant un code de programme qui, lorsqu'il est exécuté, amène le terminal à :
recevoir (101) une première opération tactile (302) lorsqu'un contenu actuellement affiché sur un écran tactile comporte une première entrée affichée correspondant à une première entrée de données stockée dans un terminal, une deuxième entrée affichée correspondant à une deuxième entrée de données stockée dans le terminal, une troisième entrée affichée correspondant à une troisième entrée de données stockée dans le terminal, et une quatrième entrée affichée correspondant à une quatrième entrée de données stockée dans le terminal, la première entrée affichée, la deuxième entrée affichée et la troisième entrée affichée étant affichées comme étant sélectionnées, la quatrième entrée affichée étant affichée comme étant non sélectionnée, l'écran tactile désignant un écran configuré pour fonctionner en utilisant un doigt ou un stylet comme dispositif tactile ;
lorsque de multiples entrées affichées, par lesquelles passe une première course (302) de la première opération tactile prenant la forme d'une course glissante sur une zone prédéfinie (301), comportent des entrées affichées à la fois sélectionnées et non sélectionnées, détecter
- un nombre d'entrées affichées sélectionnées des multiples entrées affichées par lesquelles passe la première course (302) de la première opération tactile, et
- un nombre d'entrées affichées non sélectionnées des multiples entrées affichées par lesquelles passe la première course (302) de la première opération tactile ; et
réaliser sélectivement (102), lorsqu'une première course (302) de la première opération tactile est une course glissante sur une zone prédéfinie (301), une opération de sélection ou de désélection sur chaque entrée des multiples entrées affichées par lesquelles passe la première course (302) de la première opération tactile selon une différence entre le nombre des entrées affichées sélectionnées et le nombre des entrées affichées non sélectionnées, la zone prédéfinie faisant partie d'une interface d'opération actuelle, la course glissante de la première opération tactile partant de la première entrée affichée et passant par la deuxième entrée affichée, la troisième entrée affichée et la quatrième entrée affichée,
le code de programme, lorsqu'il est exécuté, amenant le terminal à :
lorsque le nombre des entrées affichées sélectionnées n'est pas inférieur au nombre des entrées affichées non sélectionnées des multiples entrées par lesquelles passe la première course (302) de l'opération tactile, réaliser l'opération de désélection sur les multiples entrées affichées par lesquelles passe la course (302) de l'opération tactile ; ou
lorsque le nombre des entrées affichées sélectionnées est inférieur au nombre des entrées affichées non sélectionnées des multiples entrées par lesquelles passe la première course (302) de l'opération tactile, réaliser l'opération de sélection sur les multiples entrées par lesquelles passe la première course (302) de l'opération tactile.

10. Produit-programme d'ordinateur selon la revendication 9, le code de programme, lorsqu'il est exécuté, amenant en outre le terminal à :
lorsque la première course (302) de la première opération tactile atteint un bord de la zone prédéfinie, faire défiler un contenu actuellement affiché sur l'écran tactile pour afficher de nouvelles entrées affichées sur l'écran tactile, et sauvegarder un état de sélection pour toute entrée affichée par laquelle passe la première course (302) lorsque la première course (302) atteint le bord de la zone prédéfinie, faire défiler un contenu comprenant actualiser une partie du contenu affiché sur l'écran tactile.
